# EUROPEAN PATENT APPLICATION

(11) **EP 4 851 109 A1**
(43) Date of publication of application: **09.12.2026**
(21) Application number: 25768079.3
(22) Date of filing: 04.02.2025
(51) Int. Cl.: C01B 25/37, C01B 25/01, C04B 5/00, C22B 3/44, C22B 7/04

(54) **IRON PHOSPHATE PRODUCTION METHOD**

(30) Priority: 06.03.2024 JP 2024033589
(71) Applicant: JFE Steel Corporation, Tokyo 100-0011 (JP); Tokushima University, Tokushima-shi, Tokushima 770-8501 (JP)
(72) Inventor: YANO, Hiromu, Tokyo 100-0011 (JP); MATSUNAGA, Hisahiro, Tokyo 100-0011 (JP); NAKAMURA, Yoshiyuki, Tokyo 100-0011 (JP); SUGIYAMA, Shigeru, Tokushima-shi, Tokushima 770-8501 (JP)
(74) Representative: Haseltine Lake Kempner LLP
(86) International application number: PCT/JP2025/003595
(87) International publication number: WO 2025/187296

(57) **Abstract**

There is provided an iron phosphate production method that makes it possible to easily obtain iron phosphate. In a precipitate generation step (S1), an alkali is added to a phosphorus-containing solution to obtain a precipitate. In a dissolution step (S2), the precipitate is dissolved with an acid to obtain a phosphoric acid solution. In a precipitate regeneration step (S3), an alkali is added to the phosphoric acid solution to again obtain a precipitate. In the precipitate regeneration step (S3), pH of the phosphoric acid solution is adjusted to be less than 4.0. In the precipitate regeneration step (S3), pH of the phosphoric acid solution is preferably adjusted such that purity of iron phosphate in the precipitate obtained becomes not less than 90 mass%. The dissolution step (S2) and the precipitate regeneration step (S3) are preferably repeated.

## Description

### TECHNICAL FIELD

The present invention relates to a method for producing iron phosphate.

### BACKGROUND ART

While phosphorus is a resource used in various fields such as agricultural, food, medical, industrial, and other fields, phosphorus is unevenly distributed in the world, and producing countries are limited to, for instance, China, the United States, and Morocco.

Phosphorus resources distributed in Japan are phosphorus products, such as yellow phosphorus and crude phosphoric acid, and phosphate rock that is a raw material thereof. Japan entirely relies on imports.

Meanwhile, the concentration of phosphorus in molten iron tapped from a blast furnace is about 0.1 mass%. When this molten iron is subjected to conventional general treatments (dephosphorization, decarburization refining), the resulting steelmaking slag would have a low phosphoric acid concentration, for instance, at most about 5 mass% in terms of P₂O₅.

Accordingly, steelmaking slag has been used as civil engineering materials such as roadbed materials, and phosphorus in steelmaking slag has not been recovered.

In recent years, however, phosphorus in steelmaking slag generated during steel refining is being re-evaluated as a valuable phosphorus resource because prices of phosphorus resources are rising due to depletion of phosphate rock, monopolization of phosphate rock by such countries as China and the United States, and other reasons.

Patent Literature 1 discloses a method for producing (recovering) a phosphorus compound, wherein dephosphorization slag that is one type of steelmaking slag, for instance, is used as a starting raw material.

### CITATION LIST

### PATENT LITERATURE

Patent Literature 1: JP 2022-150640 A

### SUMMARY OF INVENTION

### TECHNICAL PROBLEMS

As a phosphorus compound produced (recovered) from a starting raw material such as steelmaking slag, iron phosphate is desired for example.

However, the method described in Patent Literature 1 is complicated because it needs many treatments such as cation exchange and thus requires a lot of time to obtain a target phosphorus compound.

In addition, to produce iron phosphate by the method described in Patent Literature 1, it is substantially essential to add an additional raw material containing iron.

The present invention has been made in view of the above and aims at providing an iron phosphate production method that makes it possible to easily obtain iron phosphate.

### SOLUTION TO PROBLEMS

The present inventors found, through an earnest study, that the above object is achieved by employing the configuration described below. The invention has been thus completed.

Specifically, the present invention provides the following [1] to [8].
[1] A method for producing iron phosphate, the method comprising:
   a precipitate generation step of obtaining a precipitate by adding an alkali to a phosphorus-containing solution;
   a dissolution step of dissolving the precipitate with an acid to obtain a phosphoric acid solution; and
   a precipitate regeneration step of again obtaining a precipitate by adding an alkali to the phosphoric acid solution,
   wherein in the precipitate regeneration step, pH of the phosphoric acid solution is adjusted to be less than 4.0.
[2] The method for producing iron phosphate according to [1] above,
   wherein in the precipitate regeneration step, pH of the phosphoric acid solution is adjusted such that purity of iron phosphate in the precipitate obtained becomes not less than 90 mass%.
[3] The method for producing iron phosphate according to [1] above, wherein the dissolution step and the precipitate regeneration step are repeated.
[4] The method for producing iron phosphate according to [3] above,
   wherein the dissolution step and the precipitate regeneration step are repeated until purity of iron phosphate in the precipitate obtained in the precipitate regeneration step becomes or exceeds a threshold value.
[5] The method for producing iron phosphate according to [3] above,
   wherein the dissolution step and the precipitate regeneration step are repeated based on a content of phosphorus and iron in the phosphorus-containing solution.
[6] The method for producing iron phosphate according to any one of [1] to [5] above, the method further comprising a phosphorus-containing solution preparation step before the precipitate generation step,
   wherein in the phosphorus-containing solution preparation step, a component contained in a starting raw material including phosphorus is leached into an acid to obtain the phosphorus-containing solution.
[7] The method for producing iron phosphate according to [6] above,
   wherein the starting raw material is at least one phosphorus-containing compound selected from the group consisting of steelmaking slag, sewage sludge, and waste liquid containing phosphoric acid.
[8] The method for producing iron phosphate according to any one of [1] to [7] above,
   wherein the phosphorus-containing solution contains at least elements phosphorus and iron.

### ADVANTAGEOUS EFFECTS OF INVENTION

The present invention provides an iron phosphate production method that makes it possible to easily obtain iron phosphate.

### BRIEF DESCRIPTION OF DRAWINGS

[FIG. 1] FIG. 1 is a flowchart showing the flow of a method for producing iron phosphate according to an embodiment.
[FIG. 2] FIG. 2 is a graph showing the relation between the pH of a phosphoric acid solution and the rate of transfer of each element from the phosphoric acid solution into a precipitate.
[FIG. 3] FIG. 3 is a graph showing the relation between the pH of the phosphoric acid solution and the rate of transfer of each element from the phosphoric acid solution into the precipitate.

### DESCRIPTION OF EMBODIMENTS

### [Method for producing iron phosphate]

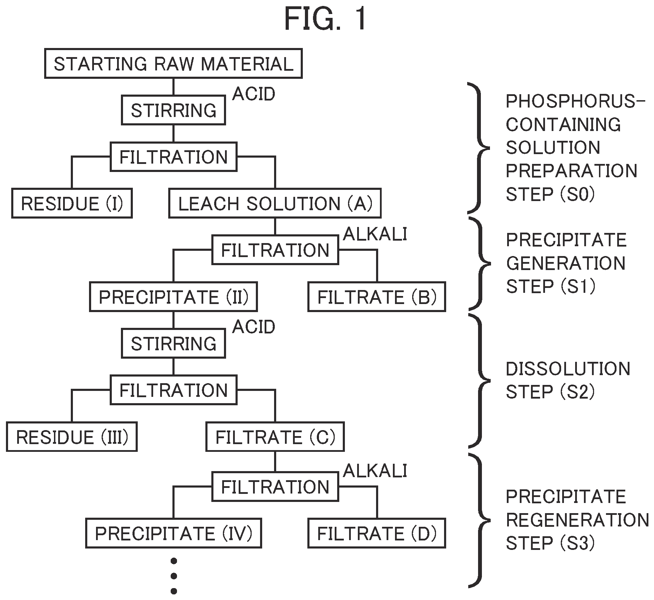

A method for producing iron phosphate according to an embodiment is described by reference to FIGS. 1 to 3.

FIG. 1 is a flowchart showing the flow of the method for producing iron phosphate according to the embodiment.

The method for producing iron phosphate according to the embodiment is generally a method for recovering a phosphorus compound containing iron phosphate (a fired product obtained by firing a precipitate, which will be described later) from a phosphorus-containing solution.

As shown in FIG. 1, the method for producing iron phosphate according to the embodiment includes a precipitate generation step (S1), a dissolution step (S2), and a precipitate regeneration step (S3) in this order.

In addition, the method for producing iron phosphate according to the embodiment may include a phosphorus-containing solution preparation step (S0) before the precipitate generation step (S1) as shown in FIG. 1.

The steps in the method for producing iron phosphate according to the embodiment are described below.

### <Phosphorus-containing solution preparation step (S0)>

In the phosphorus-containing solution preparation step (S0), a phosphorus-containing solution is prepared.

For instance, a component contained in a starting raw material is leached into an acid to obtain a phosphorus-containing solution that is acidic. In this case, more specifically, the starting raw material is added to the acid and stirred, and then the mixture is filtered. Thus, a residue (I) and a leach solution (A) are obtained. The obtained leach solution (A) is the phosphorus-containing solution.

The acid used in the phosphorus-containing solution preparation step (S0) is not particularly limited, and examples thereof include at least one selected from the group consisting of nitric acid, hydrochloric acid, sulfuric acid, phosphoric acid, and citric acid, with nitric acid or hydrochloric acid being preferred, and nitric acid being more preferred.

The concentration of the acid is not particularly limited and is preferably 0.1 to 1.5 M and more preferably 0.3 to 0.8 M.

The starting raw material is a phosphorus-containing compound (including a mixture of the phosphorus-containing compound and another compound) and contains, for instance, CaO, P₂O₅, Al₂O₃, and FeₜO. Considering that iron phosphate is recovered at the end, the starting raw material preferably contains at least P₂O₅ and FeₜO.

Specific examples of the starting raw material (phosphorus-containing compound) as above include: steelmaking slags such as dephosphorization slag and decarburization slag; sewage sludge; and waste liquid containing phosphoric acid.

When the starting raw material is steelmaking slag for example, the particle size thereof is not particularly limited. When the starting raw material is steelmaking slag, the acid used in the phosphorus-containing solution preparation step (S0) has a pH of preferably not higher than 1.0 and more preferably not higher than 0.5. The ratio between the starting raw material and the acid is not particularly limited as long as the pH of the acid for use satisfies the above range; however, when the proportion of the starting raw material is high, the amount of dissolved Si increases accordingly, and this may possibly lead to gelation of the resulting phosphorus-containing solution. Therefore, it is preferable to set the ratio taking the state of each step to be described below into account.

When the starting raw material is an acidic solution, it is not necessary to add an acid to the starting raw material, and the starting raw material may be directly used as the phosphorus-containing solution.

The phosphorus-containing solution prepared in the phosphorus-containing solution preparation step (S0) preferably contains at least the elements phosphorus (P) and iron (Fe).

The phosphorus-containing solution may further contain such elements as calcium (Ca), aluminum (Al), silicon (Si), magnesium (Mg), and manganese (Mn).

The phosphorus-containing solution prepared in the phosphorus-containing solution preparation step (S0) is acidic.

The phosphorus-containing solution has a pH of preferably lower than 4.0, more preferably lower than 3.0, and even more preferably lower than 1.5.

### <Precipitate generation step (S1)>

In the precipitate generation step (S1), an alkali is added to the phosphorus-containing solution which is acidic, thereby obtaining a precipitate.

Specifically, an alkali is added to the phosphorus-containing solution, and then the mixture is filtered, for example. Consequently, a filtrate (B) and a precipitate (II) are obtained. The precipitate (II) is the precipitate.

As the phosphorus-containing solution, the leach solution (A) obtained in the phosphorus-containing solution preparation step (S0) is used for example, but a solution obtained in another step may also be used.

One preferable example of the alkali used in the precipitate generation step (S1) is ammonia water (NH₄OH) for the reason that it does not have any unnecessary cation.

The concentration of the ammonia water is not particularly limited and is preferably 20 to 40 mass% and more preferably 25 to 35 mass%.

It should be noted that inclusion of cations may possibly be acceptable depending on the application of the phosphorus compound (iron phosphate) that is the final product. In this case, the alkali is not limited to ammonia water, and sodium hydroxide, potassium hydroxide, and the like are also usable.

In the precipitate generation step (S1), the pH of the phosphorus-containing solution after addition of the alkali is not particularly limited as long as the pH allows a precipitate to be generated, and for instance, the pH is preferably in the same range as that of the pH of a phosphoric acid solution after addition of an alkali (e.g., a pH of lower than 4.0) in the precipitate regeneration step (S3) to be described later.

### <Dissolution step (S2)>

In the dissolution step (S2), the precipitate (II) that is the precipitate obtained in the precipitate generation step (S1) is dissolved using an acid. As a result, a phosphoric acid solution is obtained.

Specifically, the precipitate is added to an acid and stirred, and then the mixture is filtered, for example. Consequently, a filtrate (C) and a residue (III) are obtained. The filtrate (C) is the phosphoric acid solution.

The acid used in the dissolution step (S2) is, for example, at least one selected from the group consisting of nitric acid, hydrochloric acid, sulfuric acid, phosphoric acid, and citric acid, preferably nitric acid or hydrochloric acid, and more preferably nitric acid.

Considering the precipitate regeneration step (S3) to be described later, the pH of the acid used in the dissolution step (S2) is preferably lower than 4.0, more preferably lower than 3.0, and even more preferably lower than 1.5. However, it is not limited thereto when there is a matter that should be prioritized over the purity to be described later, such as the case of reducing the amount of waste liquid.

The pH of the phosphoric acid solution obtained in the dissolution step (S2) is also preferably in the above range (e.g., lower than 4.0).

Which element is contained in the phosphoric acid solution obtained in the dissolution step (S2) depends on the element contained in the phosphorus-containing solution described above.

### <Precipitate regeneration step (S3)>

In the precipitate regeneration step (S3), an alkali is added to the phosphoric acid solution to again obtain a precipitate. Specifically, an alkali is added to the phosphoric acid solution, and then the mixture is filtered, for example. Thus, a filtrate (D) and a precipitate (IV) are obtained. The precipitate (IV) is the precipitate.

For the alkali used in the precipitate regeneration step (S3), those mentioned as the alkali used in the precipitate generation step (S1) are preferably used.

In the embodiment, in the precipitate regeneration step (S3), the pH of the phosphoric acid solution is adjusted when the alkali is added to the phosphoric acid solution.

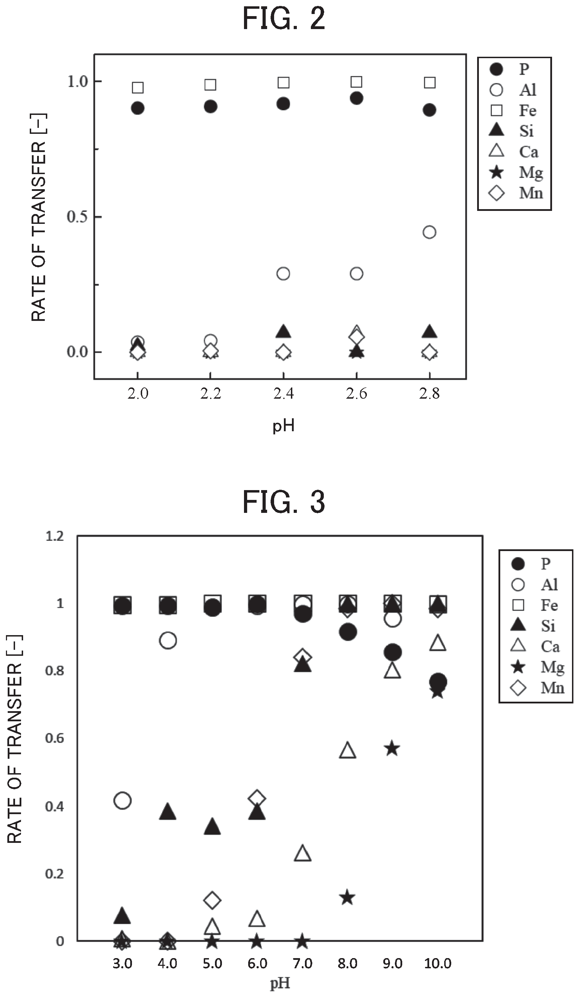

Now, reference is made to FIGS. 2 to 3.

FIGS. 2 to 3 are graphs showing the relation between the pH of a phosphoric acid solution and the rate of transfer of each element from the phosphoric acid solution into a precipitate.

In the case where, for example, an element A in a phosphoric acid solution is 100 parts by mass and 80 parts by mass thereof is transferred to a precipitate, the rate of transfer of the element A is calculated to be 80 mass%. However, the rates of transfer shown in FIGS. 2 to 3 are normalized values, and therefore no unit applies.

As evident from the graphs of FIGS. 2 to 3, the concentration of an element in a generated precipitate varies depending on the pH of a phosphoric acid solution used in generation of the precipitate.

For instance, the rates of transfer of Al and Si to the precipitate decrease with a lower pH.

The rate of transfer of P to the precipitate decreases with a higher pH.

Accordingly, in the embodiment, the pH of the phosphoric acid solution is adjusted to a low value when the alkali is added to the phosphoric acid solution to generate the precipitate in the precipitate regeneration step (S3).

In other words, the pH of the phosphoric acid solution is controlled so as not to excessively increase even after the alkali is added to the phosphoric acid solution (i.e., the pH of the phosphoric acid solution is kept to a low value). This makes it possible to increase the purity of iron phosphate in the precipitate (hereinafter also simply called "purity").

The purity means the iron phosphate content of a fired product (phosphorus compound) obtained by firing the precipitate.

Specifically, in the precipitate regeneration step (S3), the phosphoric acid solution after addition of the alkali has a pH of lower than 4.0, preferably not higher than 3.5, more preferably not higher than 3.0, and even more preferably not higher than 2.5. In this process, it is preferable to adjust the pH of the phosphoric acid solution such that the purity becomes not less than 90 mass%.

The pH of the phosphoric acid solution is adjusted to have a purity of not less than 90 mass%, for example, by the following procedure.
(1) The alkali is added little by little to the phosphoric acid solution generated in the dissolution step (S2). The amount of added alkali may be determined through trial and error. Alternatively, the amount of added alkali required to achieve the pH range allowing generation of iron phosphate may be determined by the analysis that simulates alkali addition to change the pH, using equilibrium calculation software such as "PHREEQC."
(2) The precipitate is collected, and the purity of iron phosphate is measured.
(3) Based on the measurement of the purity, one of the following processes is carried out.
   (3-1) The case that the purity of iron phosphate is more than 95 mass%: The purity is excessive. In this case, slightly lowering the purity increases the yield and is hence efficient; therefore, the procedure returns to (1) to additionally add the alkali.
   (3-2) The case that the purity of iron phosphate is not less than 90 mass% and not more than 95 mass%: Since the precipitate regeneration step (S3) is completed, the procedure proceeds to the next step.
   (3-3) The case that the purity of iron phosphate is less than 90 mass%: Since the purity will not be a value of not less than 90 mass% even if the alkali is added more, the precipitate regeneration step (S3) is finished. In this case, the production of iron phosphate is terminated for the reason of unacceptable purity, and separately, the production of iron phosphate is started again from the beginning with countermeasures such as reducing the amount of added alkali (increasing the oxidation-reduction potential). Alternatively, assuming the dissolution step (S2) and the precipitate regeneration step (S3) as one cycle, the cycle may be repeated plural times to increase the purity, as described in a determination step (S5) to be described later.

In the meantime, the pH of the phosphoric acid solution obtained in the above dissolution step (S2) (for convenience, referred to as "phosphoric acid solution (S2)") is lower than 4.0, for example.

The pH of the phosphoric acid solution after addition of the alkali in the precipitate regeneration step (S3) (for convenience, referred to as "phosphoric acid solution (S3)") is also lower than 4.0.

However, those values do not coincide with each other. Specifically, even when the pH of the phosphoric acid solution (S2) and the pH of the phosphoric acid solution (S3) are both lower than 4.0, the relation of pH of the phosphoric acid solution (S2) < pH of the phosphoric acid solution (S3) is satisfied.

Depending on the starting raw material used in the phosphorus-containing solution preparation step (S0) described above, a desired purity may not be obtained due to insufficient Fe or P in the phosphoric acid solution.

In such cases, an additional raw material may be added in the precipitate regeneration step (S3).

For example, when Fe is insufficient, iron nitrate or the like may be added as an additional raw material.

### <Firing step (S4)>

The method for producing iron phosphate according to the embodiment preferably further includes a firing step (S4) after the precipitate regeneration step (S3).

The precipitate obtained in the precipitate regeneration step (S3) is a precursor of the final product (a phosphorus compound containing iron phosphate). By firing this precipitate, a phosphorus compound containing iron phosphate is obtained as a fired product.

The firing temperature is preferably not lower than 500°C, more preferably not lower than 570°C, and even more preferably not lower than 650°C for the sake of crystallization of the resulting fired product (phosphorus compound).

At the same time, the firing temperature is preferably not higher than 900°C, more preferably not higher than 830°C, and even more preferably not higher than 750°C.

In the case where the precipitate (precursor) obtained in the precipitate regeneration step (S3) is directly used without firing, the firing step (S4) is not necessary.

### <Determination step (S5)>

The method for producing iron phosphate according to the embodiment may further include a determination step (S5) after the precipitate regeneration step (S3).

In the determination step (S5), it is determined whether the purity of iron phosphate in the precipitate obtained in the precipitate regeneration step (S3) is greater than or equal to a threshold value.

Specifically, for instance, first, the precipitate obtained in the precipitate regeneration step (S3) is fired to obtain a fired product (phosphorus compound) (see the firing step (S4)).

Next, an X-ray diffraction (XRD) pattern of the obtained fired product (phosphorus compound) is obtained to identify the kind of the phosphorus compound contained in the fired product. Thus, it is determined whether iron phosphate is contained in the fired product.

When iron phosphate is determined to be contained in the fired product, then the fired product is subjected to X-ray fluorescence (XRF) spectrometry to detect and quantify respective elements (including Fe and P). It should be noted that oxygen is usually not detected through XRF spectrometry. The ratio (unit: mass%) of the total mass of Fe and P to the total mass of all the elements detected by XRF spectrometry is determined as the content (i.e., purity) of iron phosphate in the fired product (phosphorus compound).

Subsequently, it is determined whether the purity is not less than a threshold value (e.g., 90 mass%).

The subject that makes determinations may be an operator who operates various apparatuses used for the foregoing measurements or may be a machine such as a personal computer (PC) connected to various apparatuses.

When the purity is not less than the threshold value, the sequence of steps described above is finished.

When the purity is less than the threshold value, assuming the dissolution step (S2) and the precipitate regeneration step (S3) as one cycle, the cycle may be repeated plural times until the purity becomes or exceeds the threshold value.

A higher threshold value of the purity of iron phosphate is more preferable because iron phosphate is used also for applications that require high purity, such as materials for batteries. Specifically, the threshold value is preferably not less than 80 mass% and more preferably not less than 85 mass%.

Meanwhile, when the purity is above a certain level, the effect of increasing the purity through the repetition of the dissolution step (S2) and the precipitate regeneration step (S3) decreases, and those steps may need to be repeated a lot of times to further increase the purity. In addition, as the number of repetitions increases, the yield of iron phosphate decreases. From this aspect, the threshold value of the purity of iron phosphate is preferably not more than 99.8 mass% and more preferably not more than 95 mass%.

One specific example of the threshold value of the purity of iron phosphate is 90 mass%, but the threshold value may be changed as appropriate for the above-described reasons.

Thus, according to the embodiment, the precipitate obtained in the precipitate regeneration step (S3) is fired, thereby obtaining a fired product (phosphorus compound) having a high content of iron phosphate.

In this procedure, since processes such as cation exchange are not necessary, iron phosphate can be easily obtained.

### <Pre-determination step (S6)>

The method for producing iron phosphate according to the embodiment may further include a pre-determination step (S6) after the phosphorus-containing solution preparation step (S0) and before the precipitate generation step (S1).

In the pre-determination step (S6), it is determined, before the precipitate generation step (S1), whether the content of phosphorus (P) and iron (Fe) in the phosphorus-containing solution is not less than a threshold value.

Specifically, in the pre-determination step (S6), first, the content of each element in the phosphorus-containing solution is measured with an ICP optical emission spectrometer. Then, it is determined whether the content (total content) of P and Fe in the phosphorus-containing solution is not less than a threshold value (e.g., 15 mass%).

The subject that makes determinations may be an operator who operates various apparatuses used for the above-described measurements or may be a machine such as a personal computer (PC) connected to various apparatuses.

When the content of P and Fe in the phosphorus-containing solution is less than the threshold value, then the purity of iron phosphate in the precipitate obtained through the precipitate generation step (S1), the dissolution step (S2), and the precipitate regeneration step (S3) that follow is expected to be low.

Therefore, when the content of P and Fe in the phosphorus-containing solution is less than the threshold value, assuming the dissolution step (S2) and the precipitate regeneration step (S3) as one cycle, the cycle is repeated at least two times. The number of repetitions is suitably set based on the content of P and Fe in the phosphorus-containing solution.

When the content of P and Fe in the phosphorus-containing solution is less than the threshold value, it is not necessary to perform the determination step (S5) after the first execution of the precipitate regeneration step (S3).

Meanwhile, when the content of P and Fe in the phosphorus-containing solution is not less than the threshold value (or when the content of the same is less than the threshold value but the cycle of the dissolution step (S2) and the precipitate regeneration step (S3) is already repeated at least two times), the precipitate regeneration step (S3) is preferably followed by the determination step (S5) to determine whether the purity of iron phosphate in the precipitate is not less than a threshold value.

The threshold value of the content (total content) of P and Fe in the phosphorus-containing solution is 15 mass% for example but may slightly vary depending on the other components in the phosphorus-containing solution. Therefore, the threshold value may be suitably adjusted on the basis of the content of P and Fe in the phosphorus-containing solution and the determination result of the determination step (S5) in the middle of repetitive production of iron phosphate.

In other words, in the case where the production of iron phosphate is repeated with a set threshold value and the purity is frequently determined to be less than the threshold value in the first execution of the determination step (S5) in the production processes, the threshold value may be increased. In this case, it is preferable to make the Fe/P ratio closer to 1 as the threshold value is increased.

In contrast, in the case where the purity is frequently determined to greatly exceed the threshold value in the first execution of the determination step (S5) in the production processes, the threshold value may be decreased.

### EXAMPLES

The invention is specifically described below by way of examples. However, the invention is not limited to the examples described below.

### <Examples 1 to 7>

First, in the phosphorus-containing solution preparation step (S0), steelmaking slag as a starting raw material was added to nitric acid (concentration: 0.5 M) and then stirred for 0.4 hours to obtain a phosphorus-containing solution (pH: 0.5).

The content of P and Fe in the obtained phosphorus-containing solution was not less than a threshold value (15 mass%).

Next, in the precipitate generation step (S1), ammonia water (concentration: 28 mass%) as an alkali was added to the phosphorus-containing solution under stirring with the condition of 200 rpm. The pH of the phosphorus-containing solution after addition of the alkali is shown in Table 1 below. As a result, a precipitate was obtained.

Next, in the dissolution step (S2), the precipitate was added to nitric acid (concentration: 0.5 M) and then stirred for 0.5 hours to obtain a phosphoric acid solution. The pH of the obtained phosphoric acid solution is shown in Table 1 below.

Next, in the precipitate regeneration step (S3), ammonia water (concentration: 28 mass%) as an alkali was added to the phosphoric acid solution under stirring with the condition of 200 rpm. The pH of the phosphoric acid solution after addition of the alkali is shown in Table 1 below. As a result, a precipitate was obtained.

Subsequently, the precipitate obtained in the precipitate regeneration step (S3) was fired at 700°C to obtain a crystallized fired product.

An XRD pattern was obtained for the obtained fired product (phosphorus compound) to identify the kind of the phosphorus compound contained in the fired product.

In the "Generated phase" column of Table 1 below, "A" was given when iron phosphate was contained as the phosphorus compound, and "B" was given when another phosphorus compound or another phase having an amorphous halo peak was contained in addition to iron phosphate.

The obtained fired product (phosphorus compound) was subjected also to XRF spectrometry to determine the content (i.e., purity) of iron phosphate in the fired product (phosphorus compound) in accordance with the above-described manner. The results are shown in Table 1 below.

<Examples 8 to 9>

In Examples 8 to 9, the steps up to the precipitate generation step (S1) were performed, while the dissolution step (S2) and the precipitate regeneration step (S3) were not performed ("-" was provided in relevant spaces of Table 1 below).

The precipitate obtained in the precipitate generation step (S1) was evaluated in the same manner as in Examples 1 to 7. The results are shown in Table 1 below.

### [Table 1]

**Table 1**

| | Precipitate generation step (S1) | Dissolution step (S2) | Precipitate regeneration step (S3) | Generated phase | Iron phosphate content (purity) [mass%] |
|---|---|---|---|---|---|
| | pH | pH | pH | | |
| Example 1 | 2.0 | 0.5 | 2.0 | A | 98 |
| Example 2 | 2.0 | 0.5 | 2.2 | A | 97 |
| Example 3 | 2.0 | 0.5 | 2.4 | A | 95 |
| Example 4 | 2.0 | 0.5 | 3.0 | A | 92 |
| Example 5 | 2.0 | 0.5 | 3.3 | A | 91 |
| Example 6 | 2.0 | 0.5 | 4.0 | B | 66 |
| Example 7 | 2.0 | 0.5 | 6.3 | B | 51 |
| Example 8 | 2.0 | - | - | B | 37 |
| Example 9 | 4.8 | - | - | B | 30 |

### <Summary of evaluation results>

Reference is made to the results shown in Table 1 above.

In Examples 1 to 5 where the pH of the phosphoric acid solution after addition of the alkali was adjusted to be less than 4.0 in the precipitate regeneration step (S3), a phosphorus compound with the iron phosphate content being high (not less than 90 mass%) was obtained without cation exchange or addition of an additional raw material.

In contrast, in Examples 6 to 7 where the pH of the phosphoric acid solution after addition of the alkali was not adjusted to be less than 4.0 in the precipitate regeneration step (S3), the iron phosphate content in the obtained phosphorus compound was low as compared to Examples 1 to 5.

Besides, in Examples 6 to 7 where the dissolution step (S2) and the precipitate regeneration step (S3) were not performed, the iron phosphate content in the obtained phosphorus compound was still lower.

In Example 5 where the iron phosphate content was 91 mass%, which was the lowest among Examples 1 to 5, the dissolution step (S2) and the precipitate regeneration step (S3) were further repeated, and as a result, a phosphorus compound with an iron phosphate content of 99 mass% was obtained at the end.

More specifically, assuming the firstly performed dissolution step (S2) and precipitate regeneration step (S3) as the first cycle, the iron phosphate content increased to 94 mass% through the second cycle, 97 mass% through the third cycle, and 99 mass% through the fourth cycle.

## Claims

1. A method for producing iron phosphate, the method comprising:
a precipitate generation step of obtaining a precipitate by adding an alkali to a phosphorus-containing solution;
a dissolution step of dissolving the precipitate with an acid to obtain a phosphoric acid solution; and
a precipitate regeneration step of again obtaining a precipitate by adding an alkali to the phosphoric acid solution,
wherein in the precipitate regeneration step, pH of the phosphoric acid solution is adjusted to be less than 4.0.

2. The method for producing iron phosphate according to claim 1,
wherein in the precipitate regeneration step, pH of the phosphoric acid solution is adjusted such that purity of iron phosphate in the precipitate obtained becomes not less than 90 mass%.

3. The method for producing iron phosphate according to claim 1, wherein the dissolution step and the precipitate regeneration step are repeated.

4. The method for producing iron phosphate according to claim 3,
wherein the dissolution step and the precipitate regeneration step are repeated until purity of iron phosphate in the precipitate obtained in the precipitate regeneration step becomes or exceeds a threshold value.

5. The method for producing iron phosphate according to claim 3,
wherein the dissolution step and the precipitate regeneration step are repeated based on a content of phosphorus and iron in the phosphorus-containing solution.

6. The method for producing iron phosphate according to any one of claims 1 to 5, the method further comprising a phosphorus-containing solution preparation step before the precipitate generation step,
wherein in the phosphorus-containing solution preparation step, a component contained in a starting raw material including phosphorus is leached into an acid to obtain the phosphorus-containing solution.

7. The method for producing iron phosphate according to claim 6,
wherein the starting raw material is at least one phosphorus-containing compound selected from the group consisting of steelmaking slag, sewage sludge, and waste liquid containing phosphoric acid.

8. The method for producing iron phosphate according to any one of claims 1 to 7,
wherein the phosphorus-containing solution contains at least elements phosphorus and iron.
